# EUROPEAN PATENT APPLICATION

(11) **EP 4 782 175 A1**
(43) Date of publication of application: **29.07.2026**
(21) Application number: 24868555.4
(22) Date of filing: 09.09.2024
(51) Int. Cl.: B29C 45/00, B29B 17/04, B29C 45/72, B29C 45/76, B29C 45/46, B29C 45/26, B29C 48/00, B29C 48/50

(54) **SYSTEM AND METHOD FOR FORMING RETAINING WALL BLOCK FROM RECYCLED WASTE PLASTIC**

(30) Priority: 20.09.2023 KR 20230125485
(71) Applicant: Wes Tec Global Co., Ltd., Yongin-si, Gyeonggi-do 17095 (KR)
(72) Inventor: CHOI, Kyoung Young, Yongin-si Gyeonggi-do 16814 (KR); CHOI, Hyun Seok, Yongin-si Gyeonggi-do 16814 (KR); CHOI, A Yeon, Yongin-si Gyeonggi-do 16814 (KR)
(74) Representative: Rau, Schneck & Hübner Patentanwälte Rechtsanwälte PartGmbB
(86) International application number: PCT/KR2024/013640
(87) International publication number: WO 2025/063577

(57) **Abstract**

The present invention relates to a system for forming a retaining wall block from recycled waste plastic and a method for forming a retaining wall block from recycled waste plastic, and provides the effects of saving time and effort for washing and classifying impurities, which are foreign substances mixed with waste plastic, and increasing the tensile strength of the retaining wall block by means of the foreign substances. In the present invention, the load or tensile strength of the retaining wall block is increased by filling the inside of the retaining wall block with concrete or miscellaneous stones, thus making it possible to use the retaining wall block for various purposes. Also, in the present invention, the generation of harmful substances that are inevitably generated during an incineration process can be prevented by setting to a temperature equal to or lower than a preset temperature during a forming process, and re-solidifying, thereby providing an eco-friendly effect.

## Description

### Technical Field

The present invention relates to a system and a method for molding a retaining wall block from recycled waste plastic, and more specifically, to an eco-friendly method for manufacturing a retaining wall block from recycled waste plastic, in which waste plastic is injection-molded into a final block shape by varying a temperature set for each section so as to save time and effort by washing and classifying impurities, which are foreign substances mixed with the waste plastic, and to increase tensile strength of the retaining wall block by means of the foreign substances.

### Background Art

In general, various waste synthetic resins or waste plastics discarded as waste are buried or incinerated, and in this case, the waste synthetic resins or waste plastics are a cause of contamination of surrounding soil or air environment, and thus, a method for recovering and recycling the waste synthetic resins or waste plastics is being actively studied.

In practice, not only the central government but also local governments are actively supporting the development of technologies aimed at producing products that may be used without significant problems, even if quality thereof is somewhat inferior, by recycling the waste synthetic resins instead of landfilling or incinerating the same. In response to this trend, related industries have been actively accelerating the development of technologies in which the waste synthetic resins are melted by heating and then molded again for use.

For example, in Korean Unexamined Patent Publication No. 10-2001-0104383 entitled "METHOD FOR REGENERATING PET BOTTLE PIECES AND APPARATUS THEREOF", the crushed pet bottle pieces are washed, and in this case, at a high temperature of 70°C or higher for at least 20 minutes, the crushed pet bottle pieces are regenerated through a complicated pretreatment process in which the crushed pet bottle pieces are treated with a washing solution containing caustic soda in at least one washer, thereby causing a waste water treatment problem and providing economical unprofitability in manufacturing a recycled product.

Meanwhile, Korean Registered Patent No. 10-2303457 entitled "CYLINDER HEATING APPARATUS OF CONDUIT FORMING SYSTEM USING WASTE SYNTHETIC RESIN" suggests a conduit forming system using waste synthetic resin, in which the waste synthetic resin is melted within a short time in first and second space parts in a cylinder as heat loss is not generated when heat is transferred to the loaded heater using a pipe-type heater rather than a bend-type heater, and thus the quality of the formed conduit may be improved.

The patented technology described above is configured to continuously produce conduits in which a plurality of heater insertion grooves 11 are formed in an outer circumference of a cylinder 1 while maintaining a predetermined distance in a circumferential direction of the cylinder and maintaining a predetermined distance in a longitudinal direction of the cylinder,
a pipe-type heater 53 is inserted into each of the heater insertion grooves, and a heater cover 12 is detachably coupled to the outer circumference of the cylinder 1 by a screw 13 to prevent the heat generated by the pipe-type heater from escaping to the outside while preventing the escape of each pipe-type heater 52 inserted into each of the heater insertion grooves 11.

However, when the conduit is molded as described above, the waste plastic needs to be carefully pre-treated through selection and crushing processes in advance, but it is almost impossible to wash the waste plastic bottle one by one, and it is difficult to maintain the shape during molding, resulting in a limitation in use.

Accordingly, while developing various recycled products using waste plastic, the present applicant has confirmed that, when waste plastic is used to manufacture retaining wall blocks that perform a structural role while being used in portions buried in soil, such as inclined surfaces or embankments where they are not easily visible, the tensile strength of the retaining wall blocks may be increased by melting the waste plastic while including impurities, which are foreign substances, as they are, even though the quality of the recycled products may be somewhat inferior, thereby completing the present invention.

### Disclosure

### Technical Problem

To solve the above problems, an object of the present invention is to provide an eco-friendly method for molding a retaining wall block from recycled waste plastic, in which waste plastic is injection-molded into a final block shape by varying a temperature set for each section so as to save time and effort by washing and classifying impurities, which are foreign substances mixed with the waste plastic, and to increase tensile strength of the retaining wall block by means of the foreign substances.

However, the objects of the present invention are not limited to the above-described objects, and other objects that are not described will be clearly understood by those skilled in the art from the following description.

### Technical Solution

To achieve the above objects, in a method for molding a retaining wall block from recycled waste plastic, a system (1) for molding a retaining wall block from recycled waste block may include a crushing device (100), a stepwise heating device (200), a sequential extrusion device (300), a water pipe (400), and a control device (500).

In addition, the method for molding a retaining wall block from recycled waste plastic may include: a first step in which a control device (500) introduces waste plastic into the stepwise heating device (200) configured to have different temperatures; and
a second step in which the control device (500) controls a temperature of each of a plurality of pipe-type electric heaters (210) that are formed in the stepwise heating device (200) such that the waste plastic is heated and melted into a liquid state while passing through the pipe-type electric heaters (210).

In this case, the present invention may provide the method for molding a retaining wall block from recycled waste plastic, which further includes a third step in which, after the second step, the control device (500) supplies a waste plastic liquid to a sequential extrusion device (300) through a discharge module so that the waste plastic liquid is molded into the retaining wall block through extrusion.

In addition, the present invention may provide the method for molding a retaining wall block to perform recycling of waste plastic, which further includes a third step in which, after the third step, the control device (500) introduces a plastic liquid into a mold for forming a retaining wall block of the sequential extrusion device (300) through the discharge module, and controls movement by a moving module of the sequential extrusion device (300), which rotates in a vertical or horizontal loop shape formed in the sequential extrusion device (300), in a state where the waste plastic liquid is extruded while being introduced into each mold.

In addition, the present invention may provide the method for molding a retaining wall block to perform recycling of waste plastic, which further includes a fourth step in which, after the third step, the control device (500) demolds the retaining wall block in a cooled mold after cooling is performed through a water pipe (400) in thermal contact with the mold.

To achieve the above objects, a system for molding a retaining wall block from recycled waste plastic, which may include: a stepwise heating device (200) configured to melt waste plastic; and a control device (500) configured to control temperatures of each of a plurality of pipe-type electric heaters (210) provided in the stepwise heating device (200) such that the waste plastic is melted into a liquid state while passing through the pipe-type electric heaters (210).

In addition, the present invention may provide the system for molding a retaining wall block from recycled waste plastic, which may further include a sequential extrusion device (300), in which the control device (500) is configured to supply a waste plastic liquid to the sequential extrusion device (300) through a discharge module and to mold the waste plastic liquid into a retaining wall block by extrusion.

In addition, the present invention may provide a retaining wall block formed from recycled waste plastic, which is configured to increase weight or tensile strength by using an exterior waste plastic molding part formed according to the method for molding the retaining wall block from the recycled waste plastic and by filling an interior with concrete structures or miscellaneous stones.

### Advantageous Effects

The present invention relates to a system for molding a retaining wall block from recycled waste plastic and a method for molding a retaining wall block from recycled waste plastic, and provides the effects of saving time and effort for washing and classifying impurities, which are foreign substances mixed with waste plastic, and increasing the tensile strength of the retaining wall block by means of the foreign substances.

In addition, a load or tensile strength of the retaining wall block is increased by filling the interior of the retaining wall block with concrete or miscellaneous stones, thereby making it possible to use the retaining wall block for various purposes.

In addition, according to the present invention, the generation of harmful substances that are inevitably generated during an incineration process may be prevented by setting a temperature to a temperature equal to or lower than a preset temperature during a molding process, and re-solidifying the retaining wall block, thereby providing an eco-friendly effect.

### Description of Drawings

FIG. 1 is a view for showing a system 1 for molding a retaining wall block from recycled waste plastic according to an embodiment of the present invention.
FIG. 2 is a view showing a method for molding a retaining wall block from recycled waste plastic according to the embodiment of the present invention.
FIG. 3 is a view for explaining a stepwise heating device 200 used in the method for molding a retaining wall block from recycled waste plastic according to the embodiment of the present invention.
FIG. 4 is a view showing retaining a wall block molded from waste plastic according to the method for molding a retaining wall block from recycled waste plastic according to the embodiment of the present invention.
FIG. 5 is a photograph of a construction example of the retaining wall block.

### Mode for Invention

Hereinafter, a detailed description of a preferred embodiment of the present invention will be described with reference to the accompanying drawings. In the following description of the present invention, when it is determined that a detailed description of known functions or configurations may unnecessarily obscure the gist of the present invention, the detailed description thereof will be omitted.

In the present specification, when any one component "transmits" data or a signal to another component, it means that the component may directly transmit the data or the signal to the other component, and may transmit the data or the signal to the other component through at least one other component.

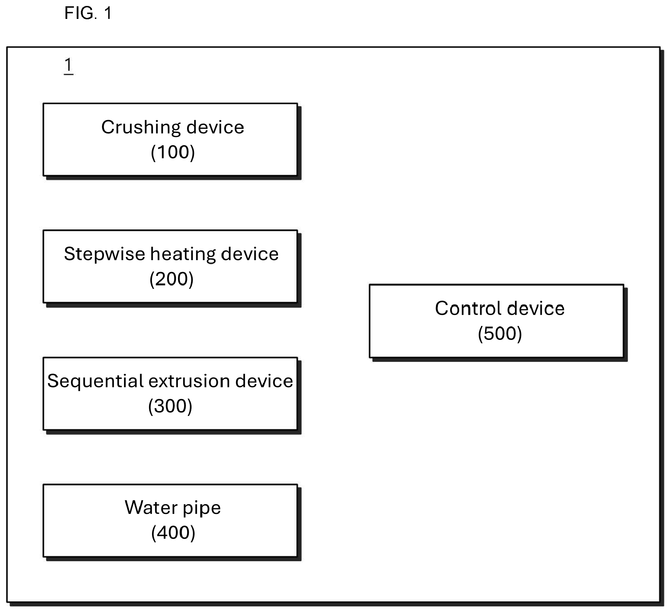

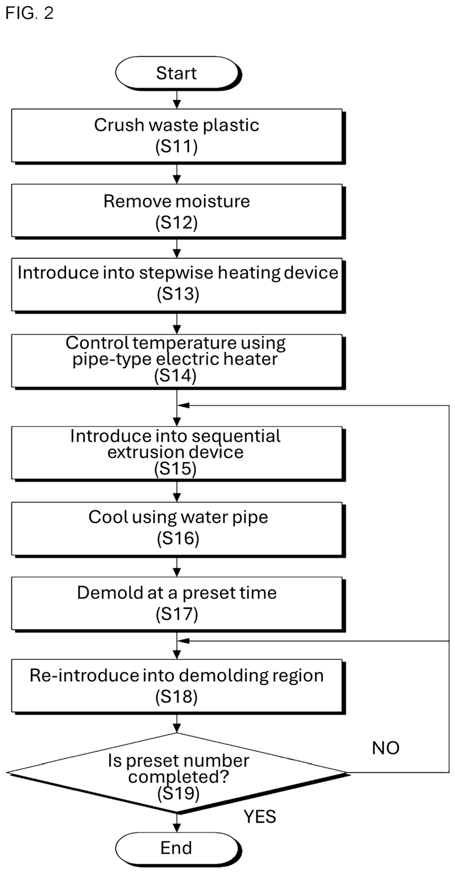

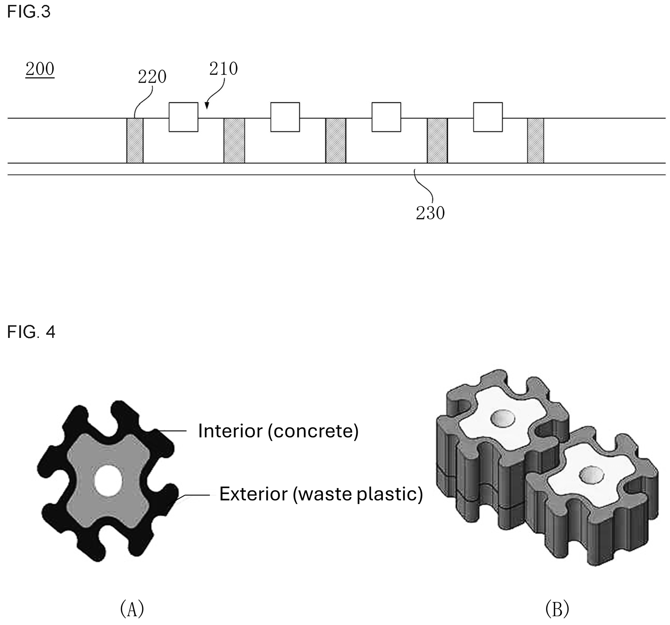

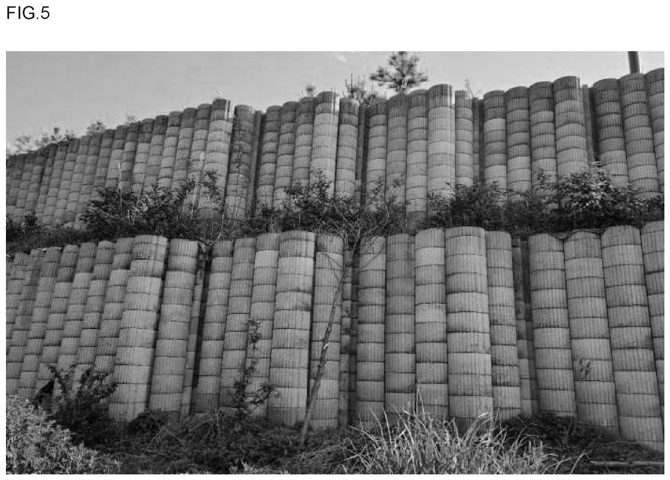

FIG. 1 is a view for showing a system 1 for molding a retaining wall block from recycled waste plastic according to an embodiment of the present invention. FIG. 2 is a view showing a method for molding a retaining wall block from recycled waste plastic according to the embodiment of the present invention. FIG. 3 is a view for explaining a stepwise heating device 200 used in the method for molding a retaining wall block from recycled waste plastic according to the embodiment of the present invention. FIG. 4 is a view showing retaining a wall block molded from waste plastic according to the method for molding a retaining wall block from recycled waste plastic according to the embodiment of the present invention, and FIG. 5 is a photograph of a construction example of the retaining wall block.

First, referring to FIG. 1, the system 1 for molding a retaining wall block from recycled waste block may include a crushing device 100, a stepwise heating device 200, a sequential extrusion device 300, a water pipe 400, and a control device 500.

Next, referring to FIG. 2, the method for molding a retaining wall block from recycled waste plastic may include a waste plastic crushing step S11, a moisture removal step S12, an introduction step S13 into the stepwise heating device, a temperature control step S14 using a pipe-type electric heater 210, an introduction step S15 into a sequential extrusion device, a cooling step S16 using a water pipe, a demolding step S17 at a preset time, a re-introduction step S18 into a demolding region, and a determination step S19 of completion of a preset number, and in this case, the crushing step S11 performed by the crushing device 100 may be omitted.

More specifically, in the waste plastic crushing step S11, the control device 500 may crush the waste plastic, which is supplied through the crushing device 100, within a preset range in which the waste plastic may be supplied to the stepwise heating device 200, and the preset range may correspond to a range within the diameter of a hopper of the stepwise heating device 200, but is not limited thereto.

After the step S11, in the moisture removal step S12, the control device 500 may remove moisture from the crushed waste plastic through natural drying, or may dry the crushed waste plastic through a dryer (not shown) to set a moisture rate of the waste plastic to a preset level or less.

After the step S12, in the introduction step S13 into the stepwise heating device, the control device 500 may introduce the waste plastic, which has been dried according to the step S12, into the stepwise heating device 200, in which the stepwise heating device 200 may include: a moving module configured to move the waste plastic from one side to the other side by receiving the waste plastic; a heating module configured to melt the moved waste plastic in a liquid state while the waste plastic is heated by heat; and a discharge module configured to discharge the melted waste plastic in a liquid state, and the introduction step S13 into the stepwise heating device may be performed by a step in which the control device 500 supplies the waste plastic to a hopper connected to supply the waste plastic to the moving module.

After the step S13, the temperature control step S14 using the pipe-type electric heater 210 may be performed by the heating module of the stepwise heating device 200, which melts the moved waste plastic in a liquid state while the waste plastic is heated by heat, and the heating module may include: a metal tube-shaped cylinder in which a first space part and a second space part are provided to communicate with each other while being horizontally adjacent to each other; the hopper which is connected to the moving module and integrally formed with an upper portion of an inlet of the cylinder so that the waste plastic may be introduced from the outside to the inside of the cylinder; a first rotation screw which is rotatably shaft-coupled to the first space part in the cylinder to receive a driving force of a motor through a power transmission unit so as to rotate primarily and impart a moving force toward an outlet to the waste plastic introduced into the cylinder through the hopper; a second rotation screw which is rotatably shaft-coupled to the second space part in the cylinder to receive a rotation force of the first rotation screw through a rotation force transmission unit so as to rotate secondarily and impart a moving force toward the outlet to the waste plastic together with the first rotation screw; and the pipe-type electric heater 210 which is provided outside the cylinder so as to melt the waste plastic, which moves from the inlet toward the outlet inside the cylinder by the rotation of the first and second rotation screws, in a liquid state as the cylinder is heated.

Meanwhile, in a state where the cylinder is divided by a heat insulation part 220 into regions divided as shown in FIG. 3, the pipe-type electric heater 210 may be individually formed inside or outside the divided cylinder regions, and thus stepwise temperature control for the formed individual regions may be performed under the control of the control device 500. In this case, in order to lower the temperature, a cooling water pipe (not shown) may be installed for each step if necessary, and may be adjusted according to a control unit. Meanwhile, the pipe-type electric heater 210 may be formed in a form connected to the discharge module for discharging the waste plastic liquid in a molten liquid state.

In this case, the discharge module includes a discharge port integrally formed at a lower portion close to the outlet of the cylinder to allow the waste plastic liquid to be discharged to the outside of the cylinder according to the rotation of the first and second rotating screws, the cylinder is located to be spaced apart from the ground by a predetermined height through a base 230, and the base 230 may be formed of a metal plate as shown in FIG. 3, but may be changed to a heat insulating material that is not limited thereto.

Therefore, when an operator operates a conduit molding system using the waste plastic, the first rotation screw, which is rotatably shaft-coupled to the first space part in the cylinder, receives the driving force of the motor (not shown) through the power transmission unit to rotate in a first direction (for example, the clockwise direction, which is the reverse direction), and the second rotation screw receives the rotation force of the first rotation screw through another power transmission unit to rotate in a second direction (for example, the counterclockwise direction, which is the forward direction) in the drawings, and at the same time, the pipe-type electric heater 210 provided outside the cylinder operates to control the control device 500 to heat the cylinder for each step.

In this case, the pipe-type electric heater 210 divided into a plurality of parts may be controlled by the control device 500 from a first temperature to an nth temperature (n is a natural number of 2 or more) for each step in order to melt foreign substances contained in the waste plastic.

According to a more specific embodiment, the control device 500 may adjust a first pipe-type electric heater 210 to start at 130°C, a second pipe-type electric heater 210 to 170°C, a third pipe-type electric heater 210 to 200°C, a fourth pipe-type electric heater (210) to 170°C, a fifth pipe-type electric heater 210 to 260°C, and
a sixth pipe-type electric heater 210 to 130°C.

That is, as a specific example, the waste plastic is changed to a gel state from being liquefied at 260°C, and the reason why the control device 500 controls the sixth pipe-type electric heater 210 at 130°C is to maintain the waste plastic liquid in the gel state.

The control device 500 performs a control such that the temperatures of the respective pipe-type electric heaters 210 are increased stepwise to different temperatures corresponding to the types of waste plastics that may be melted in each step of 130°C, 170°C, 200°C, and 260°C, and the reason for lowering the temperature once before the final-stage temperature, in which the third pipe-type electric heater 210 is set to 200°C, the fourth pipe-type electric heater 210 is reset to 170°C, and the fifth pipe-type electric heater 210 is set to 260°C, is to eliminate side effects of impurities corresponding to unmelted foreign substances, which make it difficult to maintain a crystalline state due to continuous heating, and is to maintain the crystalline state for each portion because each plastic that is melted in each step is not liquefied at once. That is, since a portion of the plastic vaporizes at 260°C or higher, a step at 170°C is formed for a time that is a preset time or shorter to generate waste plastic that is slightly less melted,
so that it is possible to add a crystallization step of holding materials by allowing the waste plastic that is less melted to penetrate and enter between retaining wall blocks finally generated.

In addition, in melting the waste plastic, washing and classifying of the waste plastic may be omitted. Instead, by providing temperature differences for each step, foreign substances such as fibrous materials or metals may be melted together with the waste plastic so as to be included in the molten waste plastic, so that the foreign substances are used as they are together with the waste plastic liquid as constituent materials of the retaining wall block to be molded. Thus, when the plastic reaches a pure molten state, PET bottles are produced in a transparent form, but when impurities are present, the impurities act as foreign substances that bind the materials together, and the material is molded into the retaining wall block, thereby providing an advantage in that the time and effort required for washing and classifying processes may be reduced.

After the step S14, in the introduction step S15 into the sequential extrusion device 300, after the liquefaction for each step in the step S14, the control device 500 may provide the waste plastic liquid to the sequential extrusion device 300 through the discharge module so as to mold the waste plastic liquid into the retaining wall block through the extrusion.

After the step S15, in the cooling step S16 using the water pipe, since the extrusion is performed in a state where the waste plastic is liquefied, when the waste plastic is not cooled, the shape thereof may be distorted, so that the control device 500 may introduce the plastic liquid into a mold for forming the retaining wall block of the sequential extrusion device 300 through the discharge module, and may control movement by the moving module of the sequential extrusion device 300, which rotates in a vertical or horizontal loop shape formed in the sequential extrusion device 300, in a state where the waste plastic liquid is extruded while being introduced into each mold.

In this case, since the water pipe 400, which is in thermal contact with the moving module for moving the mold, is formed in the moving module of the sequential extrusion device 300 in a forward region, the control device 500 may perform cooling through the water pipe 400.

After the step S16, in the demolding step S17 at a predetermined time, the water pipe 400, through which the mold moves and which in thermal contact with the moving module, is formed in the moving module of the sequential extrusion device 300 in a region moving forward according to the step S16, so that in a state where the cooling is performed through the water pipe 400, when the step in which the moving module of the sequential extrusion device 300 moves forward is m (m is a natural number of 2 or more), and at a preset stage m-L (where L is a natural number of 1 or more and smaller than m) in the control device 500, the demolding of the retaining wall block may be performed from the mold under the control of the control device 500. In practice, when the temperature is lowered, shrinkage occurs so that demolding may be easily achieved, but it is preferable that a separate external force providing device (not shown) for demolding be provided. The demolded retaining wall block may be as shown in FIG. 4.

Thereafter, the control device 500 may control the mold, which has been demolded and moves along the loop of the moving module, such that the plastic liquid is located at a position where the initially plastic liquid is introduced into the mold for forming the retaining wall block of the sequential extrusion device 300 through the discharge module, and the moving module may be a moving device including a conveyor belt or the like.

That is, when there are 10 molds that move along the moving module of the sequential extrusion device 300, water pipes 400 may be provided around the molds, and by the time the molds reach approximately the ninth position, the mold has sufficiently cooled so that demolding may be performed, and then the control device 500 may control the process such that the demolded molds return to a starting position, thereby allowing the process to be performed in a cyclic manner.

After the step S17, in the re-introduction step S18 into the demolding region, the control device 500 may provide the waste plastic liquid to the sequential extrusion device 300 including the demolded mold, which is returned through the discharge module, to perform molding into the retaining wall block through the extrusion.

After the step S18, in the determination step S19 of completion of a preset number, the control device 500 compares the number of retaining wall blocks counted up to the present during the re-introduction step of the step S18 with a preset molding number, and when the numbers are same as each other, the control device 500 does not proceed with the introduction step S15 of the retaining wall blocks into the sequential extrusion device and the subsequent re-introduction step S18, and completes only the molding of the retaining wall blocks in the molds that are currently located on the moving module, thereby terminating the process. Conversely, when the counted number of retaining wall blocks is insufficient compared to the preset molding number, the process proceeds to at least one of the step S15 or the re-introduction step S18 into the demolding region so that additional retaining wall blocks are molded until the preset molding number is reached.

Through this process, a tensile strength standard of the retaining wall block may be increased due to impurities serving as foreign substances, and the waste plastic retaining wall block that may be formed in the shape shown in FIG. 4 may be used in various applications together with concrete or miscellaneous stones within the block. Furthermore, since the molding process involves melting and re-solidifying the retaining wall block at a temperature set below a preset temperature, it is possible to provide an advantage in that carcinogenic substances that would otherwise be generated in a burning process for remolding are not produced.

The present invention may also be embodied as computer-readable codes on a computer-readable recording medium. The computer-readable recording medium includes all types of recording devices in which data readable by a computer system is stored.

Examples of the computer-readable recording medium include a ROM, a RAM, a CD-ROM, a magnetic tape, a floppy disk, an optical data storage device, and the like, and also include a recording medium implemented in the form of a carrier wave (for example, transmission through the Internet).

In addition, the computer-readable recording medium may be distributed to computer systems connected through a network, and computer-readable codes may be stored and executed in a distributed manner. In addition, functional programs, codes, and code segments for implementing the present invention may be easily inferred by programmers in the art to which the present invention pertains.

The present invention relates to a system for molding a retaining wall block from recycled waste plastic and a method for molding a retaining wall block from recycled waste plastic, and provides the effects of saving time and effort for washing and classifying impurities, which are foreign substances mixed with waste plastic, and increasing the tensile strength of the retaining wall block by means of the foreign substances.

In addition, a load or tensile strength of the retaining wall block is increased by filling the inside of the retaining wall block with concrete or miscellaneous stones, thereby making it possible to use the retaining wall block for various purposes.

In addition, according to the present invention, the generation of harmful substances that are inevitably generated during an incineration process may be prevented by setting to a temperature equal to or lower than a preset temperature during a molding process, and re-solidifying the retaining wall block, thereby providing an eco-friendly effect.

As described above, the preferred embodiments of the present invention have been disclosed in the present specification and drawings, and although specific terms are used, these are merely used in a general sense to easily describe the technical contents of the present invention and help understanding of the present invention, and are not intended to limit the scope of the present invention. It will be apparent to those skilled in the art to which the present invention pertains that other modifications based on the technical spirit of the present invention may be implemented in addition to the embodiments disclosed herein.

## Claims

1. A method for molding a retaining wall block from recycled waste plastic, the method comprising:
a first step in which a control device (500) introduces waste plastic into a stepwise heating device (200) configured to have different temperatures; and
a second step in which the control device (500) controls a temperature of each of a plurality of pipe-type electric heaters (210) that are formed in the stepwise heating device (200) such that the waste plastic is heated and melted into a liquid state while passing through the pipe-type electric heaters (210).

2. The method of claim 1, further comprising a third step in which, after the second step, the control device (500) supplies a waste plastic liquid to a sequential extrusion device (300) through a discharge module so that the waste plastic liquid is molded into the retaining wall block through extrusion.

3. The method of claim 2, further comprising, a third step in which, after the third step, the control device (500) introduces a plastic liquid into a mold for forming a retaining wall block of the sequential extrusion device (300) through the discharge module, and controls movement by a moving module of the sequential extrusion device (300), which rotates in a vertical or horizontal loop shape formed in the sequential extrusion device (300), in a state where the waste plastic liquid is extruded while being introduced into each mold.

4. The method of claim 3, further comprising a fourth step in which, after the third step, the control device (500) demolds the retaining wall block in a cooled mold after cooling is performed through a water pipe (400) in thermal contact with the mold.

5. A system for molding a retaining wall block from recycled waste plastic, the system comprising:
a stepwise heating device (200) configured to melt waste plastic; and
a control device (500) configured to control temperatures of each of a plurality of pipe-type electric heaters (210) provided in the stepwise heating device (200) such that the waste plastic is melted into a liquid state while passing through the pipe-type electric heaters (210).

6. The system of claim 5, further comprising a sequential extrusion device (300),
wherein the control device (500) is configured to supply a waste plastic liquid to the sequential extrusion device (300) through a discharge module and to mold the waste plastic liquid into a retaining wall block by extrusion.

7. A retaining wall block formed from recycled waste plastic, which is configured to increase weight or tensile strength by using an exterior waste plastic molding part formed according to the method for molding the retaining wall block from the recycled waste plastic of claims 1 to 4 and by filling an interior with concrete structures or miscellaneous stones.
